# EUROPEAN PATENT APPLICATION

(11) **EP 1 974 843 A2**
(43) Date of publication of application: **01.10.2008**
(21) Application number: 08005870.4
(22) Date of filing: 27.03.2008
(51) Int. Cl.: B23D 19/06, B41N 1/00

(54) **Planographic printing plate, and apparatus and method for manufacturing the same**

(30) Priority: 29.03.2007 JP 2007089620; 28.09.2007 JP 2007256695
(71) Applicant: FUJIFILM Corporation, Minato-ku Tokyo 106-8620 (JP)
(72) Inventor: Annoura, Yasuhiro, Haibara-gun Shizuoka (JP)
(74) Representative: Grünecker, Kinkeldey, Stockmair & Schwanhäusser Anwaltssozietät

(57) **Abstract**

According to the present invention, the droop height (DL) is set to 25 to 70 µm, a knife having an acute angle (θ) of 70° or more is used as the lower knife (54, 64), and the level difference angle (φ) of the lower knife is set to 5° or less. Thereby, it is possible to prevent stain from being formed on a planographic printing plate (10), while securing the predetermined droop height. At the same time, it is possible to suppress the generation of a burr (10B), and to prevent a flaw from being caused at the time when the planographic printing plates are stacked.

## Description

### BACKGROUND OF THE INVENTION

### Field of the Invention

The present invention relates to a planographic printing plate, and an apparatus and method for manufacturing the planographic printing plate, and more particularly, to a photosensitive planographic printing plate, an apparatus and method for manufacturing the photosensitive planographic printing plate.

### Description of the Related Art

In the engraving method (including the electronic photoengraving method) in recent years, planographic printing plates, such as a photosensitive printing plate and a heat sensitive printing plate, have been widely used in order to facilitate automation of a plate making process. The planographic printing plate is generally manufactured by such a way that a supporting body such as a sheet-like or coil-like aluminum plate is surface-treated by a separate process, such as for example, a graining process, an anodic oxidation process, a silicate process, an other chemical conversion process, or by properly combining these processes, and that the surface-treated supporting body is then coated with a photosensitive layer or a heat sensitive layer and dried, so as to thereafter be cut into a desired size. The manufactured planographic printing plate is subjected to plate making processes, such as an exposure process, a development process, and a gum coating process, and is set in a printing machine. Then, ink is applied to the planographic printing plate set in the printing machine. The applied ink is transferred from the planographic printing plate, so that characters, images and the like are printed on a paper surface.

Meanwhile, the planographic printing plate is manufactured through a cutting process for cutting a wide metallic web in the longitudinal direction. The cutting process is performed by such a way that paired upper and lower knives are provided, and the web is made to pass between the upper knife and the lower knife.

In the case of the metallic web, a rounded sag is formed on one cut surface, and a projecting burr is formed on the other cut surface. The web on which the burr is formed causes damage to the planographic printing plate used as a product. That is, in the manufacturing process, the products of planographic printing plates are stacked on a skid and directly set in a setter, and when the number of remaining planographic printing plates is reduced to be small, there is performed an operation in which the skid as a whole is exchanged, and the remaining planographic printing plates are stacked on the newly set skid. If the burr is present at this time, there occurs a trouble that the planographic printing plate is damaged by the projection of the burr.

On the other hand, in the case where the planographic printing plate is smaller than a printing paper, such as the case of a newspaper printing plate, the ink may adhere to the edge of the printing plate to cause a linear stain (also referred to as edge stain or frame stain). In order to prevent the edge stain, there is known a method in which the stress concentration of the printing roll is reduced by providing a round part in the edge on the side of the printing surface. To this end, the droop deformation obtained by the shearing is utilized.

### SUMMARY OF THE INVENTION

However, the height of droop deformation and the projecting amount of the burr on the surface opposite the droop are correlated with each other. When the edge stain is intended to be prevented by increasing the droop height, there occurs a problem that the projecting amount of the burr is also increased, so as to thereby easily damage the printing plate. In order to solve the problem, a method in which the lower knife is formed at a predetermined inclination angle, is described in Japanese Patent Application Laid-Open No. 7-164235, Japanese Patent Application Laid-Open No. 2000-61724 and in Fig. 3 of Japanese Patent Application Laid-Open No. 2001-18546. Further, in Fig. 6 and the description of Japanese Patent Application Laid-Open No. 2001-18546, there is described a method in which a level difference is provided by making the diameter at the cutting position of the lower knife smaller than the diameter of the receiving part. By using these methods, the droop can be formed, while the projecting amount of the burr is suppressed.

However, in the former method, when the angle of the lower knife is made small to thoroughly prevent the burr from projecting from the web lower surface, a burr is formed by a raised part newly formed on the web lower surface. The newly formed burr may cause damage to the products when the products are stacked.

Further, in the latter method, when the level difference is increased to thoroughly prevent the burr from projecting from the web lower surface, the end of the web is largely bent downward, to cause a crack in the treated layer on the surface of the bent part. This results in a problem of causing stain in the crack.

In this way, only by the methods in which the lower knife is formed to have a predetermined inclination angle, and in which a level difference is provided at the cutting position of the lower knife, it is not possible to manufacture a planographic printing plate which is capable of preventing the occurrence of damage due to the burr and the trouble such as the stain at the same time.

The present invention has been made in view of the above described circumstances. An object of the present invention is to provide a planographic printing plate, and an apparatus and method for manufacturing the planographic printing plate, which are capable of surely preventing the occurrence of damage due to the burr and the trouble such as the stain.

To attain the above described object, a first aspect of the present invention provides a planographic printing plate manufacturing apparatus comprising: a cutting processing section which cuts a web of a planographic printing plate in a thickness direction of the web by pinching the web with at least a pair of an upper knife and a lower knife, wherein the upper knife and the lower knife are arranged with a clearance in a width direction of the web to make a droop height of the planographic printing plate at a cutting position become 25 to 70 µm, a cutting edge of the lower knife is formed by a knife having an acute angle of 70° or more, and a top of the lower knife is arranged at a position lower than a holding section for holding the central part of the lower surface of the web, and a line connecting the cutting side end part of the holding section to the top of the lower knife has a level difference angle of 5° or less with respect to a horizontal line.

To attain the above described object, a fourth aspect of the present invention provides a planographic printing plate manufacturing method including a cutting process for cutting a web of a planographic printing plate in the thickness direction of the web by pinching the web with at least a pair of an upper knife and a lower knife, wherein the cutting process comprises: arranging the upper knife and the lower knife with a clearance in a width direction of the web so as to make a droop height of the planographic printing plate at a cutting position become 25 to 70 µm; arranging a top of the lower knife, which cutting edge is formed by a knife having an acute angle of 70° or more, at a position lower than a holding section for holding the central part of the lower surface of the web, and setting a level difference angle between a line connecting a cutting side end part of a holding section to the top of the lower knife and a horizontal line to 5° or less.

To attain the above described object, a fifth aspect of the present invention provides a planographic printing plate manufactured by being cut in the thickness direction of the printing plate, wherein a droop height on the upper side of the planographic printing plate at a cutting position is 25 to 70 µm, and in that a lower end of a downward burr at the cutting position is located above a lower end position of the planographic printing plate, which lower end position is in the inside of the downward burr.

A sixth aspect of the present invention is characterized, in the fifth aspect, in that a height of a raised part formed near the cutting position to project from the lower surface of the planographic printing plate is 5 µm or less.

The present inventors have obtained the finding, as a method to suppress a burr generated according to a droop height, that when the droop height is set to 25 to 70 µm, it is possible to secure the predetermined droop height and to suppress the generation of a burr causing a flaw, by using a knife having an acute angle of 70° or more as the lower knife, and by setting the level difference angle of the lower knife to 5° or less. The first and fourth aspects according to the present invention have been made on the basis of the finding. The clearance between the upper knife and the lower knife is set so as to make the droop height become 25 to 70 µm. At the same time, a knife having an acute angle of 70° or more is used as the lower knife, and the level difference angle of the lower knife is set to 5° or less. Thereby, the droop height of the upper surface side of a planographic printing plate is secured, so as to make it possible to prevent the stain from being formed, and also to prevent the flaw from being caused by the burr at the time when the printing plates are stacked. That is, as described in the fifth aspect, it is possible to manufacture a planographic printing plate which has the droop height of 25 to 70 µm, and in which the lower end of the burr is above the lower end position of the planographic printing plate, the lower end position being in the inside of the burr. Further, as described in the sixth aspect, it is also possible to manufacture a planographic printing plate in which the height of the raised part formed to project from the lower surface of the planographic printing plate near the cutting position is 5 µm or less.

Note that the "droop height" in the present invention means an amount by which the upper surface of the planographic printing plate is lowered at the cutting position. Further, in the present invention, "up" and "down" represent a relative positional relation. When one of a pair of knives is set as an upper knife, and when the other of the pair of knives is set as a lower knife, the upper knife side is set as "up" and the lower knife side is set as "down". Further, in the present invention, "cutting" means to cut a planographic printing plate in its thickness direction, and includes cutting (so-called slitting) a long-sized web in the longitudinal direction and cutting the long-sized web in the width direction and in an oblique direction.

A second aspect of the present invention is characterized, in the first aspect, in that the lower knife is detachably attached to the receiving roller having the holding section, and the interval between the receiving roller and the lower knife can be adjusted in the width direction of the web.

According to the present invention, the lower knife and the holding section (receiving roller) are provided separately from each other, and hence it is possible to simply adjust the positional relationship between the lower knife and the holding section in the width direction of the web. Further, according to the present invention, the lower knife and the holding section (receiving roller) are provided separately from each other. Thus, the lower knife and the holding section can be separately worked (for example, polished), so that the positional relationship between the lower knife and the holding section can be simply adjusted in the vertical direction. Thereby, in the present invention, even when the lower knife wears, the positional relationship between the lower knife and the holding section can be simply restored.

The third aspect of the present invention is characterized, in the second aspect, in that an intermediate member is detachably attached between the lower knife and the receiving roller. According to the third aspect of the present invention, the interval between the lower knife and the holding section (receiving roller) can be adjusted in the width direction of the web by attaching the intermediate member.

According to the present invention, the droop height is set to 25 to 70 µm, a knife having an acute angle of 70° or more is used as the lower knife, and the level difference angle of the lower knife is set to 5° or less. Thereby, it is possible to prevent stain from being formed on a planographic printing plate, while securing the predetermined droop height. At the same time, it is possible to suppress the generation of a burr, and to prevent a flaw from being caused at the time when the planographic printing plates are stacked.

### BRIEF DESCRIPTION OF THE DRAWINGS

Fig. 1 is a perspective view showing a configuration of an apparatus for manufacturing a planographic printing plate according to the present embodiment;
Fig. 2 is a front view showing a configuration of a cutting part;
Fig. 3 is a sectional view showing a relationship between an upper knife and a lower knife;
Fig. 4 is a cross sectional view at a cutting position of a PS plate cut by the cutting part according to the present invention;
Fig. 5 is a cross sectional view at a cutting position of a PS plate cut by a conventional apparatus;
Fig. 6 is a sectional view showing a lower knife unit configured differently from that shown in Fig. 3; and
Fig. 7 is an enlarged view of the part P in Fig. 6.

### DETAILED DESCRIPTION OF THE PREFERRED EMBODIMENT

In the following, a preferred embodiment of a planographic printing plate, and an apparatus and method for manufacturing the planographic printing plate according to the present invention will be described with reference to the accompanying drawings.

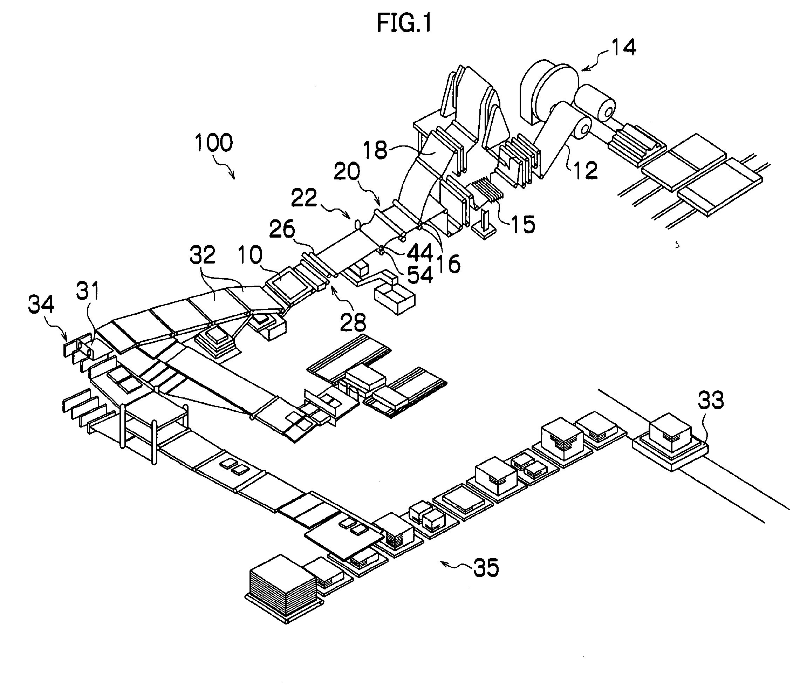

Fig. 1 is a perspective view showing a configuration of an apparatus for manufacturing a planographic printing plate according to the present embodiment, and shows a processing line 100 of a sheet-like planographic printing plate 10 (hereinafter referred to as PS plate 10).

As shown in Fig.1, a feeder 14 is arranged in the upstream side (right upper side in Fig. 1) of the processing line 100. A web 12 wound in a rolled shape beforehand is loaded to the feeder 14, and the web 12 is successively wound out from the feeder 14.

The long-sized web 12 fed from the feeder 14 is subjected to curl correction by a leveler 15. Thereafter, the web 12 is bonded with an interleaving paper 18 at a position of feed rollers 16 and 16, so that they are tightly contacted with each other by electrification. The web 12 made in tight contact with the interleaving paper 18 is fed to a notcher 20, by which a punched part is formed in the web 12. The web 12 in which the punched part is formed is fed to a cutting part (corresponding to a cutting processing section) 22, so as to be cut in the longitudinal direction. Knives (hereinafter also referred to as an upper knife 44 and a lower knife 54) of the cutting part 22 are adapted to be movable in the width direction of the web 12 at the position of the punched part, and adapted to be able to change the cutting width of the web 12 while continuously cutting the web 12. Note that the cutting part 22 will be described in detail below.

The feed length of the web 12 cut into a predetermined width is detected by a length measuring apparatus 26, so that the web 12 is cut by an inter-running cutter 28 at an instructed timing. Thereby, the PS plate 10 having a set size is manufactured. The PS plate 10 is sent to an accumulator 34 by a conveyor 32.

In the accumulator 34, a predetermined number of PS plates 10 are stacked, so that an accumulated bundle 31 is formed. Note that in the accumulator 34, it is also possible to arrange a protective sheet (generally referred to as "cardboard") made of a paperboard, or the like, on the upper and lower sides or one side of the accumulated bundle 31. The accumulated bundles 31 are stacked on a palette 33 through a feeding section 35. Thereafter, the accumulated bundles 31 are sent to a storage chamber, such as a rack warehouse, or to a packaging process, and are packaged by packaging materials (a tape, an internal packaging material, an external packaging material, and the like). Further, the accumulated bundles 31 can also be stacked on a skid (a flat-bed skid, a vertical type skid, or the like) for an automatic platemaking machine. Note that when the accumulated bundles 31 are stacked on the skid so as to be packaged, it may also be configured such that an accumulator for accumulating the accumulated bundles 31 on the skid is provided in the processing line 100, to directly accumulate the accumulated bundles 31 on the skid in the processing line 100. Note that the packaging form and the feeding form of the PS plates 10 are not limited to the above described forms. For example, the interleaving paper 18 and the other packaging materials may be omitted.

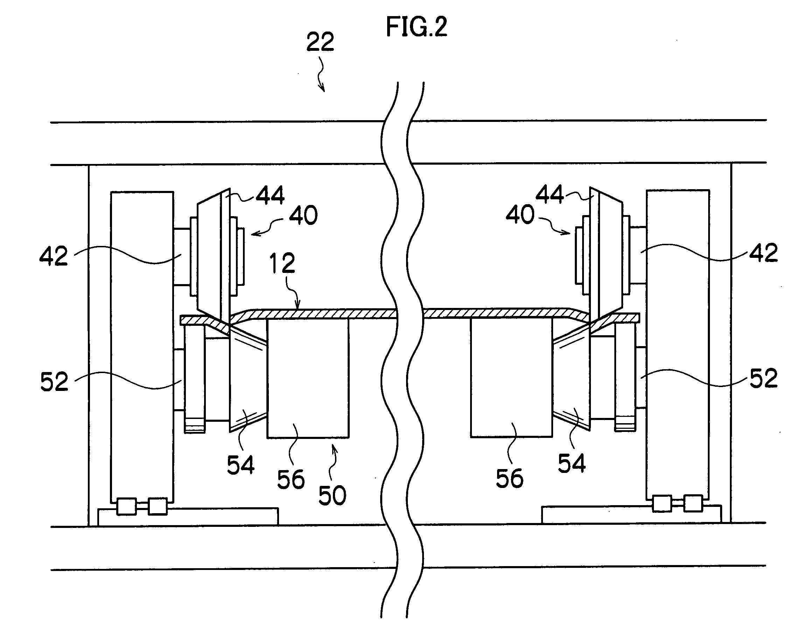

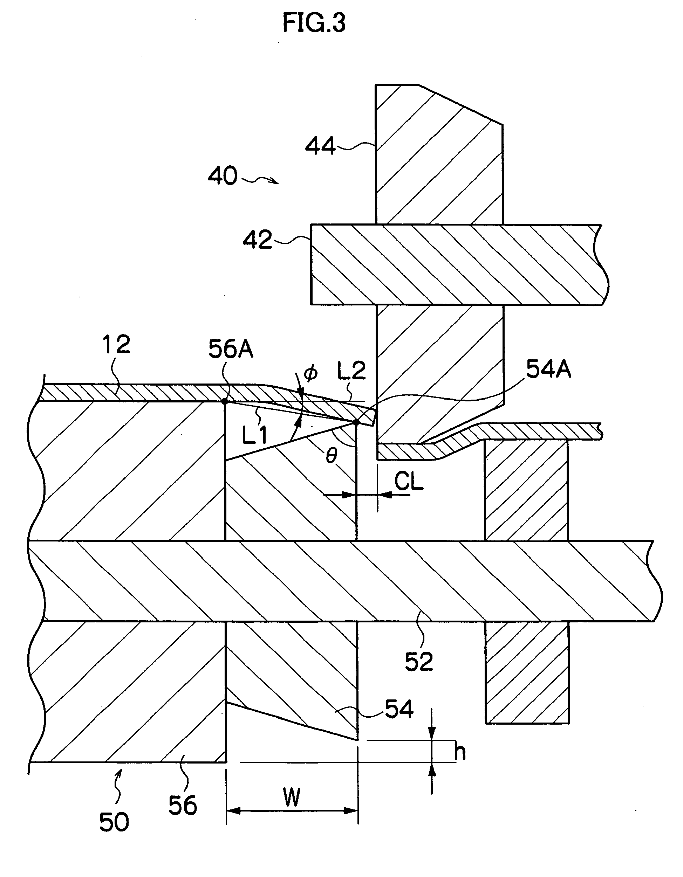

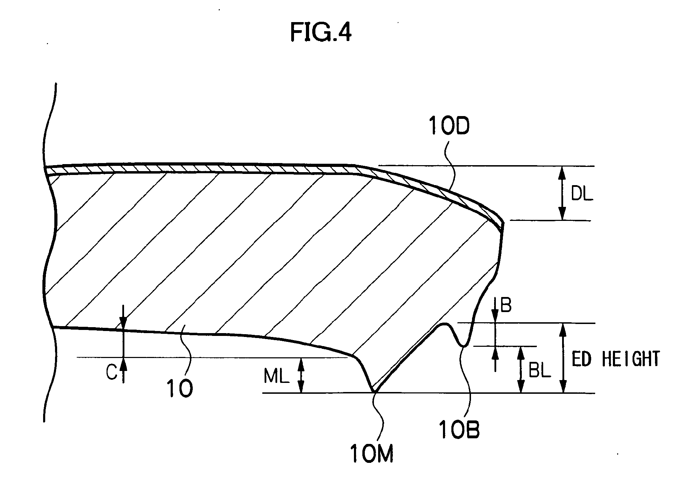

Fig. 2 is a front view showing a configuration of the cutting part 22, and Fig. 3 is a sectional view showing a relationship between the upper knife 44 and the lower knife 54. Further, Fig. 4 shows a cross section at a cutting position of the PS plate 10 cut by the cutting part 22. Note that Fig. 4 shows a state where the printing surface is set upward.

As shown in Fig. 2, the cutting part 22 is provided with upper knife units 40 and 40 and lower knife units 50 and 50. In the upper knife unit 40, the upper knife 44 is supported by a horizontally arranged shaft 42 which is rotatably driven by a drive unit (not shown). On the other hand, in the lower knife unit 50, a receiving roller 56 and the lower knife 54 are supported by a shaft 52 arranged in parallel with the shaft 42 of the upper knife unit 40, and the shaft 52 is adapted to be rotatably driven in linkage with the shaft 42 of the upper knife unit 40. The upper knife 44 and the lower knife 54 are paired, and the web 12 is cut in the longitudinal direction thereof by being passed between the upper knife 44 and the lower knife 54.

As shown in Fig. 3, the upper knife 44 and the lower knife 54 are arranged with a predetermined clearance CL in the width direction of the web 12, and the clearance is set so as to make a droop height DL of the manufactured PS plate 10 (see Fig. 4) within a predetermined range. For example, the clearance CL is set to 20 to 80 µm so that the droop height DL of the PS plate 10 becomes 25 to 70 µm. Here, the droop height DL means an amount by which the upper surface (the surface on the side of the upper knife 44 at the time of cutting) of the PS plate 10 is lowered at the cutting position, as shown in Fig. 4.

The receiving roller 56 of the lower knife unit 50 is formed in a cylindrical shape having a fixed diameter. The web 12 runs in the state of being wound around the receiving roller 56. That is, the lower surface of the web 12 is supported by the upper surface side of the receiving roller 56.

The lower knives 54 are arranged on both outsides of the receiving rollers 56 in the width direction of the web 12. The lower knife 54 is formed in a truncated cone shape whose diameter is increased toward the outside in the width direction of the web 12, and tip of cutting edge (outermost projecting part) of the lower knife 54 is formed into a knife having an acute angle of 70° or more. That is, in the sectional view showing in Fig. 3, it is configured such that the knife tip angle θ of the lower knife 54 is 70° or more. In this way, by using the knife having the acute angle of 70° or more, the raised amount ML of a raised part 10M (see Fig. 4) formed on the lower surface of the PS plate 10 can be suppressed to 5 µm or less. That is, in the case where an acute angled knife having a lower knife angle θ of less than 70° is used, a large raised part 10M is formed near the cutting position on the lower surface of the PS plate 10 after the cutting process, and the raised part 10M causes a flaw when the PS plates are stacked. However, by using the acute angled knife having the lower knife angle θ of 70° or more, it is possible to prevent such large raised part 10M from being formed. Note that it is preferred to set the lower knife angle θ to satisfy a range: 70° < θ < 90°, and it is more preferred to set the lower knife angle θ to satisfy a range: 75° ≤ θ ≤ 85°.

Further, in the lower knife 54, the outside diameter at tip of the cutting edge is smaller than the outside diameter of the receiving roller 56, and the tip of the cutting edge of the lower knife 54 is arranged inside the outer peripheral surface of the receiving roller 56. Therefore, as shown in Fig. 3, the uppermost edge position 54A of the tip of the cutting edge of the lower knife 54 is arranged lower than the uppermost edge position 56A of the receiving roller 56. Here, a line connecting the position 54A to the position 56A is set as L1, and an angle between the line L 1 and a horizontal line L2 is set as a level difference angle φ. The level difference angle φ is preferably set larger than 0° and set to 5° or less, and is more preferably set to 1.5° or more and set to 3° or less. When the level difference angle φ is large, there are possibilities that the warp amount C (see Fig. 4) of the manufactured PS plate 10 is increased to cause a crack in the photosensitive layer on the surface of the PS plate, and stain is caused at the crack position, and that after the cutting process, the lower knife 54 interferes with the cut end surface of the PS plate 10 to cause damage to the PS plate 10. Further, when the level difference angle φ is set small, the quality of the PS plate is liable to be varied. Note that the warp amount C means an amount by which the central side of the web 12 is warped upward, and, it is preferred that the warp amount C is 30 µm or less.

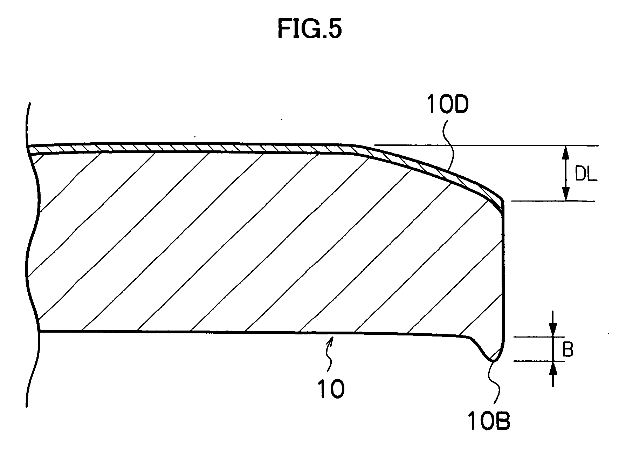

Next, an operation of the planographic printing plate manufacturing apparatus configured as described above will be described with reference to Fig. 4 and Fig. 5. Fig. 5 is a cross sectional view at a cutting position of the PS plate cut by a conventional apparatus.

As shown in Fig. 5, in the PS plate 10 processed by the conventional apparatus, a droop deformation part 10D whose upper surface is lowered downward at the cutting position is formed, and a downward burr 10B is formed at the cutting position of the PS plate 10. Then, as the droop height DL is increased, it is possible to prevent the stain (edge stain) at the edge of the PS plate 10 from being caused at the time of printing. In this case, the droop height DL is preferably set to 25 to 70 µm.

However, conventionally, when the droop height DL is set to 25 to 70 µm, the burr 10B is also enlarged with the increase in the droop height DL, resulting in a problem that the PS plates 10 are easily damaged when being stacked.

Thus, in the present embodiment, the clearance CL between the upper knife 44 and the lower knife 54 is not only set so as to make the droop height DL become 25 to 70 µm, but a knife having an acute angle of 70° or more is used as the lower knife 54, and the level difference angle φ of the lower knife 54 is set to 5° or less. By configuring the cutting part 22 in this way, it is possible to prevent the damage and stain from being caused, while securing the droop height DL of 25 to 70 µm. That is, as shown in Fig. 4, the projecting amount BL of the burr lOB formed downward at the cutting position of the PS plate 10 is suppressed to be zero or less. Here, the projecting amount BL of the burr 10B means an amount by which the burr 10B projects from the lower end position (the raised part 10M in the present embodiment) of the PS plate 10 in the inside of the burr 10B, and is a value which is defined as positive when the burr 10B projects downward from the lower end position. Further, in the present embodiment, by configuring the upper knife 44 and the lower knife 54 as described above, the raised amount ML of the raised part 10M formed near the cutting position on the lower surface of the PS plate 10 can be set to 5 µm or less, and further, the warp amount C of the PS plate 10 can be set to 30 µm or less. The PS plate 10 formed in this way is capable of preventing the occurrence of troubles, such as the flaw and stain, at the time of being stacked.

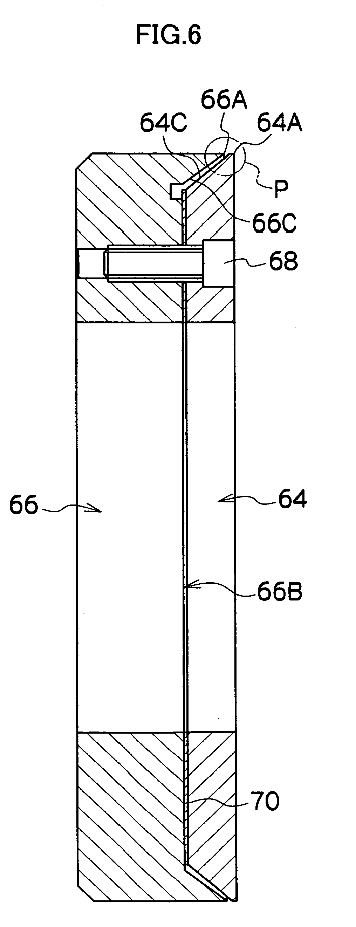

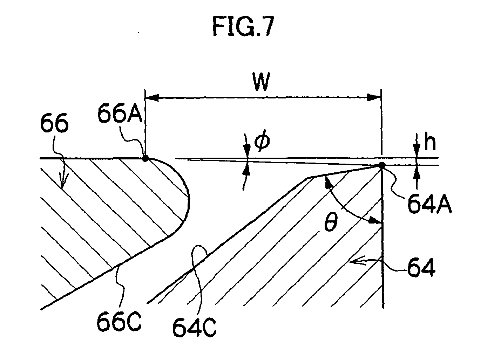

Note that the configuration of the lower knife 54 and the receiving roller 56 is not limited to the above described embodiment, and various forms are possible, as long as the forms satisfy the above described relationship between the uppermost edge position 54A of the lower knife 54 and the uppermost edge position of the receiving roller 56. For example, a form shown in Fig. 6 and Fig. 7 may also be used. The lower knife 64 and the receiving roller 66 which are shown in Fig. 6 are attached instead of the lower knife 54 and the receiving roller 56 at the right side of Fig. 2. Further, Fig. 7 is an enlarged view of the part P in Fig. 6.

As shown in these figures, the lower knife 64 and the receiving roller 66 are formed in a substantially cylindrical shape, and are fixed by being penetrated by the shaft. The lower knife 64 is formed in a truncated cone shape whose diameter is reduced toward the left side in Fig. 6 (that is, toward the inside of the PS plate 10). Further, as shown in the enlarged view of Fig. 7, the lower knife 64 is formed in a two staged truncated cone shape in which the knife angle is changed in the middle with respect to the angle θ at the uppermost edge position 64A.

On the other hand, in the receiving roller 66, a recessed part 66B is formed in the right side surface, so as to enable the lower knife 64 to be attached from the right side in Fig. 6 (that is, from the outside of the PS plate 10). The recessed part 66B is formed into an inverted truncated cone shape whose inner peripheral surface 66C is inclined, and the inner peripheral surface 66C is configured so as not to contact with the outer peripheral surface 64C of the lower knife 64. The lower knife 64 is arranged inside the recessed part 66B, and thereafter is fixed to the receiving roller 66 by a plurality of screws (only one screw is shown in Fig. 6) 68.

A thin disc-like intermediate member 70 is attached between the receiving roller 66 and the lower knife 64, as required. The intermediate member 70 is fixed, together with the lower knife 64, to the receiving roller 66 with the screws 68. Note that the intermediate member 70 is a member for adjusting the position of the receiving roller 66 and the lower knife 64 in the right and left direction. When the interval between the receiving roller 66 and the lower knife 64 is desired to be narrowed, a mode of removing the intermediate member 70 is also possible. Further, when the interval between the receiving roller 66 and the lower knife 64 is desired to be increased, an intermediate member 70 with a large thickness is attached.

As shown in Fig. 7, rounding work is applied to the right side end of the receiving roller 66, and the radius of the rounding work is set to about 2 mm. Here, the end (part where the rounding work is started) of the flat part of the receiving roller 56 is defined as the uppermost edge position 66A. Further, the interval between the uppermost edge position 66A of the receiving roller 66 and the uppermost edge position 64A of the lower knife 64 in the lateral direction (the width direction of the PS plate 10) is set as W, and the interval between the uppermost edge position 66A and the uppermost edge position 64A in the vertical direction (radial direction) is set as h.

In the lower knife unit configured as described above, the interval W and the interval h can be easily adjusted. That is, the interval W can be adjusted by the above described intermediate member 70, and the interval h can be adjusted by polishing the outer peripheral surface of the receiving roller 66. Therefore, when the lower knife 64 wears and is polished, the positional relationship between the uppermost edge position 64A of the lower knife 64 and the uppermost edge position 66A of the receiving roller 66 may be shifted. However, even in this case, the interval W and the interval h can be restored to the original dimensions by polishing the outer peripheral surface of the receiving roller 66, and by exchanging the intermediate member 70. Thereby, the positional relationship between the uppermost edge position 64A of the lower knife 64 and the uppermost edge position 66A of the receiving roller 66 can be always fixed, so that the web 12 can be excellently cut.

Further, according to the present embodiment, the warp amount C can be adjusted by changing the interval W and the interval h, so that it is possible to prevent a flaw at the raised part 10M from being caused by the increase in the warp amount C.

Further, according to the present embodiment, the tip of the receiving roller 66 is rounded, and hence, it is possible to prevent the web 12 from being bent at the tip position when the web 12 is cut.

Note that in the above described embodiment, there is described an example in which the receiving roller 56 and the lower knife 54 are configured to be separated from each other, but the present invention is not limited to this. The receiving roller 56 and the lower knife 54 may also be integrally configured. Further, in the lower knife 54, the tip of the cutting edge may have the knife having the acute angle of 70° or more, and hence the shape of the lower knife 54 as a whole is not limited to the truncated cone shape. Further, there is shown in Fig. 2 an example in which the right and left ends of the web 12 are cut, but the central part of the web 12 may also be similarly cut.

In the following, there will be described the Web 12 and the PS plate 10 which are preferably used in the present invention.

In the web 12, a photosensitive layer (or heat sensitive layer) is formed beforehand on a supporting body made of aluminum, and the surface on which the photosensitive layer (or heat sensitive layer) is formed is used as an image forming surface (the surface of the web 12) of the PS plate 10. The web 12 is processed by the processing line 100 so as to have a desired size, and thereby becomes the PS plate 10 which can be used for the printing.

Further, as the aluminum plate used as the supporting body, it is possible to apply, for example, JIS 1050 material, JIS 1100 material, JIS 1070 material, an Al-Mg based alloy, an Al-Mn based alloy, an Al-Mn-Mg based alloy, an Al-Zr based alloy, an Al-Mg-Si based alloy, and the like. In the manufacturing process of the aluminum plate in a manufacturer, after an aluminum ingot which complies with the above described standards is manufactured and subjected to hot rolling, the aluminum ingot is subjected to a heat treatment referred to as annealing as required, and subjected to cold rolling, so as to thereby be formed into a belt-shaped aluminum plate having a predetermined thickness.

The PS plate 10 is formed by applying a coating film (a photosensitive layer in the case of a photosensitive printing plate, and a heat sensitive layer in the case of a heat sensitive printing plate) to one surface of the thin aluminum plate formed into a rectangular plate shape. The coating film is subjected to plate making processing, such as the exposure, developing processing and the gumming processing. Then, the PS plate is set to a printing machine, and ink is applied to the surface of the PS plate, so that characters, images, and the like are printed on a paper surface.

Note that the specific configuration of the PS plate 10 (web 12) is not limited in particular. However, a planographic printing plate by which the plate making can be directly performed from digital data, can be obtained by forming the planographic printing plate as a heat mode laser printing plate and a photon method laser printing plate.

Also, the surface to which the coating film is applied is referred to as an image forming surface, and the surface opposite the image forming surface, that is, the surface to which the coating film is not applied, is referred to as non-image forming surface. Note that the PS plate 10 of the present embodiment is a plate in a stage before the processing (exposure, development, and the like) required for the printing is performed, and may also be referred to as a planographic printing original plate or a planographic printing plate material in some cases.

Further, the PS plate 10 can be formed into planographic printing plates corresponding to various platemaking methods by selecting various components in the photosensitive layer or the heat sensitive layer. As examples of specific modes of the planographic printing plate according to the present invention, the following modes (1) to (11) are listed.
(1) a mode in which the photosensitive layer contains an infrared absorbing agent, a compound which generates acid by heat, and a compound which is cross-linked by acid.
(2) a mode in which the photosensitive layer contains an infrared absorbing agent and a compound which is made alkali-soluble by heat.
(3) a mode in which the photosensitive layer includes two layers: a layer containing a compound which generates a radical by laser-beam irradiation, an alkali-soluble binder, and a poly-functional monomer or a pre-polymer; and an oxygen barrier layer.
(4) a mode in which the photosensitive layer includes two layers: a physical development nucleus layer; and a silver halide emulsion layer.
(5) a mode in which the photosensitive layer includes three layers: a polymer layer containing a poly-functional monomer and a poly-functional binder; a layer containing silver halide and a reducing agent; and an oxygen barrier layer.
(6) a mode in which the photosensitive layer includes two layers: a layer containing novolak resin and naphthoquinonediazide; and a layer containing silver halide.
(7) a mode in which the photosensitive layer includes an organic photo conductor.
(8) a mode in which the photosensitive layer includes two to three layers: a laser beam absorbing layer removed by laser beam irradiation; an oleophilic layer; and/or a hydrophilic layer.
(9) a mode in which the photosensitive layer contains a compound which absorbs energy to generate acid, a polymer compound having, in a side chain, a functional group which generates sulfonic acid or carboxylic acid with acid, and a compound which gives energy to an acid generator by absorbing visible light.
(10) a mode in which the photosensitive layer contains a quinonediazide compound and novolac resin.
(11) a mode in which the photosensitive layer contains a compound which is decomposed by light or ultraviolet rays to form a cross linked structure by itself or with other molecules in the layer, and an alkali-soluble binder.

In particular, in recent years, there may be used a planographic printing plate coated with a high sensitivity photosensitive type coating film which is to be exposed by a laser beam, and a heat sensitive type planographic printing plate (for example, the above described modes (1) to (3), or the like).

Note that the wavelength of a laser beam here is not limited in particular, and as the lasers having applicable wavelength regions, the following lasers are, for example, listed.
(a) A laser having a wavelength region of 350 to 450 nm (as a specific example, a laser diode having a wavelength of 405 ± 5 nm).
(b) A laser having a wavelength region of 480 to 540 nm (as specific examples, an argon laser having a wavelength of 488 nm, a (FD) YAG laser having a wavelength of 532 nm, a solid-state laser having a wavelength of 532 nm, and a (green) He-Ne laser having a wavelength of 532 nm).
(c) A laser having a wavelength region of 630 to 680 nm (as specific examples, a He-Ne laser having a wavelength of 630 to 670 nm and a red semiconductor laser having a wavelength of 630 to 670 nm).
(d) A laser having a wavelength region of 800 to 830 nm (as a specific example, an infrared (semiconductor) laser having a wavelength of 830 nm).
(e) A laser having a wavelength region of 1064 to 1080 nm (as a specific example, a YAG laser having a wavelength of 1064 nm).

Among these laser beams, any of the laser beams having the wavelength regions of (b) and (c) is applicable to any of the planographic printing plates which have the photosensitive layers of the above described modes of (3) and (4), or a planographic printing plate having a heat sensitive layer. Further, any of the laser beams having the wavelength regions of (d) and (e) is applicable to any of the planographic printing plates which have the photosensitive layers of the above described modes of (1) and (2), or a planographic printing plate having a heat sensitive layer. Of course, the relationship of a laser beam wavelength region with a photosensitive layer, or with a heat sensitive layer is not limited to these.

The shape of the PS plate 10 is not limited in particular. For example, the PS plate may be an aluminum plate, and the like, having a thickness of 0.1 to 0.5 mm, a long side length (width) of 200 to 1650 mm, and a short side length (length) of 200 to 3150 mm, and having one surface coated with a photosensitive layer or a heat sensitive layer.

As the interleaving paper 18 which is used in the present invention, interleaving papers generally used for the planographic printing plate may be used, and typical examples of these papers are shown as follows. The specific configuration of the interleaving paper 18 is not limited in particular, as long as the interleaving paper 18 is capable of surely protecting the coating film of the PS plate 10. For example, there may be used, as the interleaving paper 18, a paper using wood pulp in an amount of 100 %, a paper using synthetic pulp in which the wood pulp is not used in an amount of 100 %, a paper having a low density polyethylene layer formed on the surface of these papers, and the like.

Particularly, since the material cost is low in the paper without using the synthetic pulp, and hence the interleaving paper 18 can be manufactured at low cost. More specifically, there is listed an interleaving paper which is produced from bleached kraft pulp and which have a basis weight of 20 to 55 g/m², a density of 0.7 to 0.85 g/cm³, a moisture content of 4 to 6%, a Bekk smoothness of 10 to 800 seconds, a PH value of 4 to 6, and an air permeability of 15 to 300 sec, but the interleaving paper applicable in the present invention is not limited to this.

### [Example]

Tests were performed by changing conditions such as the clearance CL, the knife tip angle of the lower knife, and the level difference angle of the lower knife, in the above described cutting part. Then, there were measured the droop height, the projecting amount BL and the raised amount ML of the burr, and the like, of the PS plate 10 manufactured in the tests. Further, the occurrence of the flaw at the time when the printing was performed by using the products of the PS plate 10 was judged, and the occurrence of the stain due to bending (that is, stain at the position of a crack caused in the photosensitive layer surface due to an excessive warp amount C), and of the edge stain was studied. The results obtained by the tests are shown in Table 1.

**[Table 1]**

| | CL (µm) | DL (µm) | B (µm) | θ (°) | ML (µm) | h | W | φ (°) | ED height | BL (µm) | Flaw determination | Bending stain | Edge stain | Overall evaluation |
|---|---|---|---|---|---|---|---|---|---|---|---|---|---|---|
| Test Ex. 1 | 40 | 40 | 12 | 85.0 | 0 | 0.07 | 3.2 | 1.3 | 15 5 | -3 | Good | Good | Moderate (Acceptable) | Good |
| Test Ex. 2 | 55 | 55 | 17 | 85.0 | 0 | 0.07 | 2.4 | 1.7 | 18 | -1 | Good | Good | Good | Good |
| Test Ex. 3 | 55 | 55 | 17 | 85.0 | 0 | 0.1 | 2.6 | 2.2 | 24 | -3 | Good | Good | Good | Good |
| Test Ex. 4 | 55 | 55 | 17 | 85.0 | 0 | 0.1 | 2 | 2.9 | 22 | -5 | Good | Good | Good | Good |
| Test Ex. 5 | 55 | 55 | 17 | 85.0 | 0 | 0.12 | 2.3 | 3.0 | 22 | -5 | Good | Good | Good | Good |
| Test Ex. 6 | 55 | 55 | 17 | 85.0 | 0 | 0.15 | 1.7 | 5.0 | 25 | -8 | Good | Moderate | Good | Moderate |
| Test Ex. 7 | 55 | 55 | 17 | 85.0 | 0 | 0.15 | 1.5 | 5.7 | 30 | -13 | Good | Bad | Good | Bad |
| Test Ex. 8 | 50 | 50 | 10 | 90.0 | 0 | 0.05 | 2 | 1.4 | 10 | 0 | Moderate | Good | Good | Moderate |
| Test Ex. 9 | 50 | 50 | 10 | 87.5 | 0 | 0.05 | 2 | 1.4 | 15 | -5 | Good | Good | Good | Good |
| Test Ex. 10 | 50 | 50 | 10 | 85.0 | 0 | 0.05 | 2 | 1.4 | 17 | -7 | Good | Good | Good | Good |
| Test Ex. 11 | 50 | 50 | 10 | 80.0 | 2 | 0.05 | 2 | 1.4 | 20 | -10 | Good | Good | Good | Good |
| Test Ex. 12 | 50 | 50 | 10 | 70.0 | 2 | 0.05 | 2 | 1.4 | 20 | -10 | Good | Good | Good | Good |
| Test Ex. 13 | 50 | 50 | 10 | 67.5 | 5 | 0.05 | 2 | 1.4 | 25 | -15 | Bad | Good | Good | Bad |
| Test Ex. 14 | 50 | 50 | 10 | 65.0 | 6 | 0.05 | 2 | 1.4 | 26 | -16 | Bad | Good | Good | Bad |
| Test Ex. 15 | 60 | 55 | 20 | 90.0 | | 0 | 0 | 0.0 | 0 | 20 | Bad | Good | Good | Bad |
| Test Ex. 16 | 60 | 55 | 20 | 90.0 | 0 | 0.15 | 1.5 | 5.7 | 12 | 8 | Bad | Bad | Good | Bad |
| Test Ex. 17 | 20 | 20 | 7 | 87.5 | 0 | 0.07 | 3.2 | 1.3 | 13 | -6 | Good | Good | Bad | Bad |

As can be seen from Table 1, in the test example 7 in which the level difference angle φ was set to exceed 5°, the stain due to bending (stain caused by the increase in the warp amount) was caused, while in the test examples 1 to 6 in which the level difference angle φ was set to 5° or less, the stain due to bending was rarely caused. Particularly, in the test examples 2 to 5 in which the level difference angle φ was set to 1.5° to 3°, the stain due to the bending was not caused.

In the test examples 13 and 14 in which the knife tip angle of the lower knife was set to less than 70°, there was obtained a result that a raised part having a height of 5 µm or more was formed on the lower surface of the PS plate, so as to cause the flaw at the time when the PS plates were stacked. On the other hand, in the test examples 8 to 12 in which the knife tip angle was set to 70° or more, there was obtained a result that the height of the raised part was able to be suppressed to 2 µm or less, and the flaw was not caused at the time when the PS plates were stacked. However, in the test example 8, the numerical values (quality) of the test result were varied, and hence the test result as a whole was evaluated as "Moderate".

Further, in the test example 15 in which the lower knife and the receiving knife was formed to have a cylindrical shape of the same diameter, the burr projecting from the lower surface of the PS plate was generated, so as to cause the flaw. In the test example 16 in which a cylindrical lower knife was used with the level difference angle set larger than 5°, the burr projecting from the lower surface of the PS plate was generated, and the warp amount was increased, so as to cause the stain. Further, in the test example 17 in which the droop height was set small, the edge stain was caused.

## Claims

1. A planographic printing plate manufacturing apparatus (100) comprising:
a cutting process section (22) which cuts a web (12) of a planographic printing plate (10) in a thickness direction of the web by pinching the web with at least a pair of an upper knife (44) and a lower knife (54, 64), wherein
the upper knife (44) and the lower knife (54, 64) are arranged with a clearance (CL) in a width direction of the web to make a droop height (DL) of the planographic printing plate (10) at a cutting position become 25 to 70 µm,
a cutting edge (54A, 64A) of the lower knife (54, 64) is formed by a knife having an acute angle (θ) of 70° or more, and
a top (54A, 64A) of the lower knife (54, 64) is arranged at a position lower than a holding section for holding the central part of the lower surface of the web, and a line (L1) connecting the cutting side end part (56A, 66A) of the holding section to the top of the lower knife has a level difference angle (φ) of 5° or less with respect to a horizontal line (L2).

2. The planographic printing plate manufacturing apparatus (100) according to claim 1, wherein the lower knife (54, 64) is detachably attached to a receiving roller (56, 66) having the holding section, and the interval between the receiving roller and the lower knife can be adjusted in the width direction of the web (12).

3. The planographic printing plate manufacturing apparatus (100) according to claim 2, wherein an intermediate member (70) is detachably attached between the lower knife (54, 64) and the receiving roller (56, 66).

4. A planographic printing plate manufacturing method including a cutting process for cutting a web (12) of a planographic printing plate (10) in the thickness direction of the web by pinching the web with at least a pair of an upper knife (44) and a lower knife (54, 64),
wherein the cutting process comprises:
arranging the upper knife (44) and the lower knife (54, 64) with a clearance (CL) in a width direction of the web to make a droop height (DL) of the planographic printing plate at a cutting position become 25 to 70 µm;
arranging an upper end (54A, 64A) of the lower knife (54, 64), which cutting edge is formed by a knife having an acute angle (θ) of 70° or more, at a position lower than a holding section for holding a central part of the lower surface of the web, and setting a line connecting (L1) a cutting side end part of the holding section to the upper end (54A, 64A) of the lower knife (54, 64) has a level difference angle (φ) of 5° or less with respect to a horizontal line (L2).

5. A planographic printing plate (10) manufactured by being cut in the thickness direction of the planographic printing plate, wherein
a droop height (DL) on the upper side of the planographic printing plate (10) at a cutting position is set to 25 to 70 µm, and
a lower end of a downward burr (10B) at the cutting position is located above a lower end position of the planographic printing plate (10), which lower end position is in the inside of the downward burr (10B).

6. The planographic printing plate (10) according to claim 5, a height (ML) of a raised part (10M) formed near the cutting position to be raised from the lower surface of the planographic printing plate (10) is set to 5 µm or less.
